# EUROPEAN PATENT APPLICATION

(11) **EP 4 597 884 A1**
(43) Date of publication of application: **06.08.2025**
(21) Application number: 24155723.0
(22) Date of filing: 05.02.2024
(51) Int. Cl.: H04B 17/00, H04B 17/14, H04B 17/29

(54) **SYSTEM FOR REAL-TIME CALIBRATION AND METHOD OF PERFORMING A REAL-TIME CALIBRATION**

(71) Applicant: Rohde & Schwarz GmbH & Co. KG, 81671 München (DE)
(72) Inventor: Reinhardt, Alwin, 81671 München (DE); Fischbach, Benjamin, 81671 München (DE); Sanftl, Andreas, 81671 München (DE); Schellens, Philipp, 81671 München (DE); Kurk, Jaron, 81671 München (DE); Hersch, Norbert, 81671 München (DE)
(74) Representative: Prinz & Partner mbB

(57) **Abstract**

The invention relates to a system (10) for real-time calibration. The system (10) comprises at least one antenna (12) configured to receive an RF signal, a receiver (16), and an antenna path (14) that is connected to the at least one antenna (12) and the receiver (16). The system (10) has a calibration signal generator (24) configured to generate a calibration signal. The system (10) has a coupling device (26) connected with the calibration signal generator (24) and the antenna path (14). The coupling device (26) is configured to couple the calibration signal into the antenna path (14) such that the calibration signal and the radio frequency signal are forwarded simultaneously to the receiver (16) via the antenna path (14). Further, a method of performing a real-time calibration is described.

## Description

The invention relates to a system for real-time calibration. Further, the invention relates to a method of performing a real-time calibration.

In the state of the art, different kind of systems are known that have to be calibrated continuously. This may be caused by time, namely after a predetermined time span. Moreover, environmental conditions may have an impact on the overall characteristics of the system such that a (re-)calibration is necessary. The respective system may have an antenna for receiving a radio frequency (RF) signal that is processed by the system, particularly a receiver that has to be maintained in a calibrated state.

These systems with antenna are typically calibrated by using an RF calibration signal that is received by the antenna and processed by the system, particularly the receiver. In an alternative solution, an antenna path originating from the antenna towards the receiver is interrupted or rather a switch is located in the antenna path, which has at least two switching positions, namely a first switching position in which a connection to the antenna is established and a second switching position in which a connection to a calibration signal generator is established. The switch however can only be in either its first switching position or its second switching position.

These kinds of calibration however require an interruption of an ongoing RF measurement such that the duty cycle of the system is reduced which is disadvantageous.

In order to overcome this issue, namely the reduction of the duty cycle, it is also known in the state of the art to mathematically calculate the influences on a calibrated state and to mathematically compensate for any negative impacts, for instance higher temperature, higher moisture and other impacts. This requires to sense at least those environmental parameters that are taken into consideration. Depending on the required or desired degree of correctness, the mathematical computation is quite complex.

Accordingly, there is a need for a system and method that ensure measurements in a calibrated state with a maximized duty cycle.

The invention provides a system for real-time calibration. The system comprises at least one antenna configured to receive a radio frequency (RF) signal, a receiver, and an antenna path. The antenna path is connected to the at least one antenna and the receiver. The system also comprises a calibration signal generator configured to generate a calibration signal. Further, the system comprises a coupling device connected with the calibration signal generator and the antenna path The coupling device is configured to couple the calibration signal into the antenna path such that the calibration signal and the radio frequency signal are forwarded simultaneously to the receiver via the antenna path.

Further, the invention provides a method of performing a real-time calibration. The method comprises the steps of:
- Receiving, by at least one antenna, a radio frequency signal,
- Forwarding the radio frequency signal to an antenna path,
- Generating, by a calibration signal generator, a calibration signal,
- Coupling, by a coupling device, the calibration signal into the antenna path, and
- Forwarding the radio frequency signal and the calibration signal simultaneously to a receiver connected to the antenna path.

Contrary to the state of the art, the system comprises a coupling device connected with the calibration signal generator and the antenna path. The coupling device may have at least one port to which the calibration signal generator is connected. Thus, the coupling device is configured to receive the calibration signal from the calibration signal generator. In fact, the coupling device is located in the antenna path. Thus, the coupling device may have at least two further ports that are connected to the antenna and the receiver, respectively.

In fact, the antenna path is located between the at least one antenna and the receiver such that the RF signal received by the antenna is forwarded to the receiver via the antenna path. When being forwarded to the receiver via the antenna path, the RF signal passes the coupling device.

Generally, the receiver is configured to process the RF signal received via the at least one antenna in order to perform a measurement, thereby gathering measurement data. This corresponds to a regular operation of the system. The measurement data may be outputted in order to inform an operator of the system accordingly. For instance, the measurement data is displayed on a display.

In addition, the receiver is configured to process the calibration signal received in order to calibrate itself. Therefore, it might not be necessary to manually calibrate the receiver.

The main idea of the invention is to not interrupt a regular operation of the system since the radio frequency signal and the calibration signal are forwarded to the receiver simultaneously. Hence, it is not necessary to stop the regular operation of the system. Put differently, the calibration can be performed in real-time, namely during an ongoing measurement performed by the system.

Furthermore, it is not necessary to sense any environmental parameters anymore such that the respective environmental sensors are not necessary anymore for keeping the system, particularly the receiver, in its calibrated state.

Moreover, short-term deviations of environmental parameters can be taken into account due to the real-time calibration that takes place simultaneously with the measurement. In the state of the art, a short-term deviations of a certain environmental parameter, which takes place between two calibrations, would not have been considered at all, but it might have influenced the measurement that took place at that time. Consequently, the accuracy is increased simultaneously.

The measurement performed by the system may relate to a direction finding in case the system is a direction finding system. However, the measurement performed may also relate to a RF signal analysis in order to detect anomalies in an RF spectrum.

In any case, the system is kept in its calibrated state due to the real-time calibration performed simultaneously with the RF measurement.

An aspect provides that the calibration signal generator is configured to generate the calibration signal continuously. Hence, the calibration signal is generated continuously by the calibration signal generator. Therefore, the calibrated state can be ensured since the calibration is done in a continuous manner when processing the respective calibration signal by means of the receiver during the regular operation. In other words, the system, particularly the receiver, is calibrated as long as the system is operated.

According to another aspect, the calibration signal generator is configured to generate the calibration signal with a predetermined power level. The calibration signal generator can be set manually by an operator or a manufacturer, e.g. with respect to the characteristics of the receiver and/or the coupling device. Thus, the calibration signal may have a predetermined power level, which ensures that the calibration signal received by the receiver has a power level below a detection threshold of the receiver, but higher than a noise floor level of the receiver. Hence, the calibration signal will not be processed by the receiver as part of the RF signal for providing the measurement data. Hence, the operator does not have to manually separate data associated with the calibration signal which simplifies the regular measurements. The calibration signal generator may also receive a feedback signal with respect to the a noise level in the RF spectrum measured in order to adapt the predetermined power level such that the calibration signal has a power when being received by the receiver, which is higher than a noise (floor) level.

In addition to the predetermined power level, the coupling device may have an influence on the power of the calibration signal, namely a respective attenuation. Therefore, the characteristics of the coupling device are also taken into account when setting the predetermined power level.

A power level of the calibration signal is higher than a noise floor level and/or below a detection threshold of the receiver. In other words, the power level is below the detection threshold of the receiver when received by receiver, e.g. either generated with a respective predetermined power level that is already below the detection threshold or attenuated by the coupling device when coupling the calibration signal into the antenna path such that the power level of the calibration signal is attenuated accordingly.

Another aspect provides that the receiver is configured to calibrate itself by processing the calibration signal during a regular operation in which a radio frequency measurement is performed. The receiver calibrates itself by processing the calibration signal during a regular operation. Hence, the continuous and real-time calibration is ensured. As indicated above, the regular operation corresponds to the processing of the RF signal. Since the radio frequency signal and the calibration signal are processed simultaneously, no interruption of regular operation takes place and, thus, no specific RF signal will be missed. The duty cycle of the system is maximized.

According to a further aspect, the calibration signal generator is configured to generate the calibration signal in a frequency range outside of a frequency band of detection of the receiver. The calibration signal is generated in a frequency range outside of a frequency band of detection of the receiver. Hence, it is ensured that the calibration signal does not impair the regular operation of the system, e.g. the RF signal measurement. In fact, the system, e.g. the receiver, is set to measure a certain frequency band. This information is forwarded to the calibration signal generator which in turn generates the calibration signal with a frequency outside of the certain frequency band such that the calibration signal does not interact with the RF signals in the certain frequency band that is monitored during the regular operation. The controlling of the frequency of the calibration signal may be done instead of the power level adjustment or in addition thereto, as both measures ensure that the receiver does not process the calibration signal as part of the RF signal.

The coupling device may be a coupler, particularly a directional coupler, or a multiplexer such that the calibration signal and the radio frequency signal are multiplexed in order to obtain a single multiplexed output signal forwarded to the receiver. The multiplexed output signal encompasses the calibration signal and the radio frequency signal. Hence, both signals, namely the calibration signal and the RF signal, can be processed simultaneously via the antenna path, as no switch is implemented in the antenna path.

Moreover, the calibration signal may be a narrowband calibration signal or a broadband calibration signal. Of course, the calibration signal may also be varied such that the calibration signal is generated with a bandwidth between a narrowband and broadband. Actually, the kind of calibration signal may be adapted with respect to the regular operation of the system.

Another aspect provides that the calibration signal consists of at least one reference frequency. The reference frequency may be set in the system such that the system, particularly the receiver, is aware of the frequency, thereby ensuring that the calibration signal is not analyzed/evaluated during the regular operation. Moreover, the calibration signal may comprise several reference frequencies. Hence, an influence of the frequency can be taken into consideration, thereby ensuring that the system, particularly the receiver, is calibrated for a frequency span, namely the frequency span encompassing the several reference frequencies.

Particularly, the at least one reference frequency varies over time. Depending on the application scenario, the at least one reference frequency may be altered. This inter alia ensures that the calibration does not impair the RF signal measurement.

Further aspects and advantages of the claimed subject matter will become more readily appreciated as the same become better understood by reference to the following description when taken in conjunction with the accompanying drawings. In the drawings:
- Figure 1 schematically shows a system for real-time calibration according to the invention,
- Figure 2 schematically shows an overview of a calibration signal for real-time calibration in a frequency spectrum when using the method of performing a real-time calibration according to the invention,
- Figure 3 schematically shows a system for calibration according to the state of the art, and
- Figure 4 schematically shows an overview of a calibration signal for real-time calibration in a frequency spectrum when using the method of performing a real-time calibration according to the state of the art.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

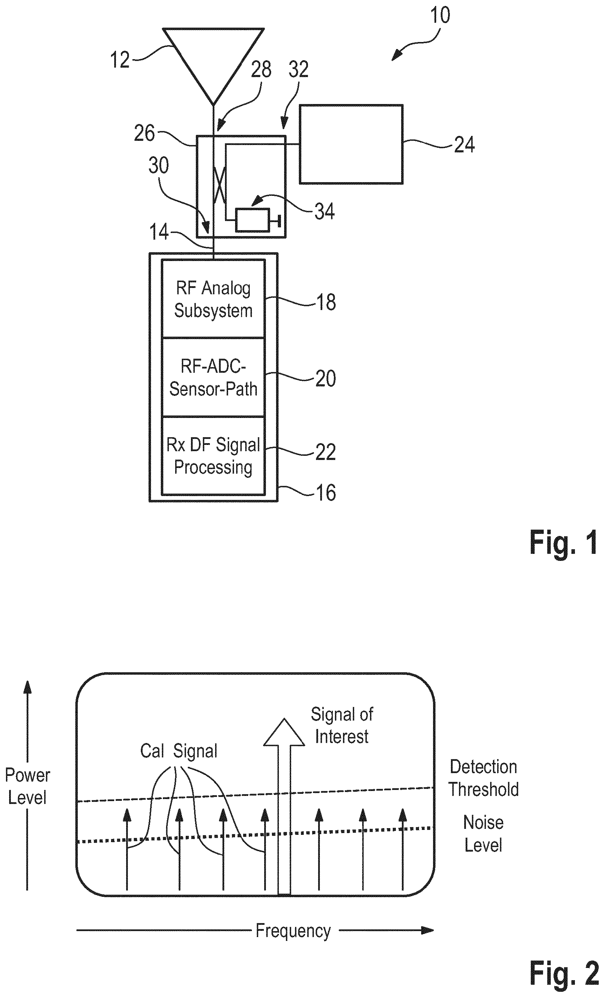

In Figure 1, a system 10 is shown that is used for real-time calibration. The system 10 may relate to a direction finding system that is used for determining information like azimuth, elevation and level of a radio frequency (RF) signal received.

The system 10 comprises at least one antenna 12 for receiving the RF signal. The antenna 12 may have several antenna elements. The antenna 12 is connected to an antenna path 14 that is also connected to a receiver 16. Hence, the antenna path 14 is located between the antenna 12 and the receiver 16.

The antenna 12 receives the RF signal that is forwarded to the receiver 16 via the antenna path 14.

The receiver 16 has a RF analog subsystem 18 and a digitizing path 20 for digitizing an analog signal in order to obtain a digitized signal. The digitized signal is internally processed by the receiver 16 by means of a signal processing circuit 22, for instance for direction finding.

The system 10 further comprises a calibration signal generator 24 that generates a calibration signal which is used by the system 10 for calibrating itself. In fact, the calibration signal is used by the receiver 16 for calibration purposes.

The calibration signal generator 24 is connected with the antenna path 14 by means of a coupling device 26.

In the shown embodiment, the coupling device 26 is a coupler, particularly a directional coupler, which has four ports 28, 30, 32, 34, namely first port 28 connected to the antenna 12, a second port 30 connected to the receiver 16, a third port 32 connected to the calibration signal generator 24, and a fourth port 34 that is isolated.

The coupling device 26 receives the RF signal and the calibration signal which both are forwarded to the receiver 16.

In fact, the coupling device 26, namely the coupler, is operated in an additive mixing mode since the RF signal and the calibration signal are additively mixed to obtain an output signal that is forwarded to the receiver 16. The output signal encompasses the calibration signal and the RF signal.

Accordingly, the calibration signal and the radio frequency signal are forwarded simultaneously to the receiver 16 via the antenna path 14 due to the coupling device 26 located in the antenna path 14 and connected to both the antenna 12 and the calibration signal generator 24.

Therefore, the calibration signal can be forwarded to the receiver 16 for self-calibration during an ongoing measurement, namely a measurement of the RF spectrum, e.g. the RF signal(s) received by the antenna 12. Consequently, a real-time calibration is possible.

The calibration signal generator 24 generates the calibration signal continuously, thereby ensuring that the system 10, particularly the receiver 16, may calibrate itself continuously so as to be kept in a calibrated state.

When referring to Figure 2, it becomes obvious that the calibration signal ("Cal signal") is received by the receiver 16 with a power level higher than a noise floor level and below a detection threshold of the receiver 16, which both are indicated by the dashed lines.

This can be ensured by means of the calibration signal generator 24 that generates the calibration signal with a predetermined power level that is in the specific range. However, the calibration signal generator 24 may also generate the calibration signal with a different predetermined power level, e.g. higher than the detection threshold of the receiver 16, as the coupling device 26 applies an attenuation factor on the calibration signal when coupling the calibration signal into the antenna path 14. This effect may be taken into account when generating the calibration signal such that the calibration signal received by the receiver 16 has a power level in the range between the noise floor level and the detection threshold of the receiver 16 as indicated in Figure 2.

This specific power level of the calibration signal ensures that the receiver 16 senses the calibration signal, as it is higher than the noise floor level, but the receiver 16 does not process the calibration signal in a similar manner as the RF signal since the power level of the calibration signal is lower than the detection threshold of the receiver 16. Thus, the calibration signal does not affect the RF signal measurement.

Figure 2 further shows that the calibration signal has at least one reference frequency, particularly several reference frequencies that are spaced from each other, particularly in an equidistant manner. Hence, the calibration of the receiver 16 can be performed for a frequency span that is covered by the several reference frequencies.

Moreover, it becomes obvious from Figure 2 that the real-time calibration enables a simultaneous RF signal measurement ("Signal of Interest"), thereby ensuring that a specific RF signal is not missed while calibrating the system 10, particularly the receiver 16.

In other words, both the regular operation and the calibration may take place simultaneously. Hence, the receiver 16 calibrates itself by processing the calibration signal during the regular operation, namely the RF signal measurement. As indicated above with regard to the power level of the calibration signal, the receiver 16 is enabled to sense the calibration signal for calibration purposes, but the receiver 16 does not process the calibration signal as part of the RF signal.

This can also be achieved when the calibration signal is generated in a frequency range outside of a frequency band of detection of the receiver 16. During its regular operation, the receiver 16 may monitor a certain frequency range, namely the frequency band of detection. The calibration signal generator 24 is informed about the frequency band of detection of the receiver 16 such that the calibration signal generator 24 generates the calibration signal in a frequency range outside of the frequency band of detection of the receiver 16 in order to ensure that the calibration signal will not be detected by the receiver 16 as part of the RF spectrum monitored.

Hence, it is possible to vary the frequency of the calibration signal over time, for instance the at least one reference frequency.

Generally, the calibration signal generated may be a narrowband calibration signal or a broadband calibration signal. Actually, this may depend on the specification application of the system 10, e.g. the regular operation mode set.

A comparison between Figures 1 and 3 as well as Figures 2 and 4 show the differences of the system 10 according to the invention with respect to the system known in the state of the art.

In fact, no switch connecting the calibration signal generator and the antenna is located in the antenna path 14, but the coupling device 26. Hence, the system 10 according to the invention is not operated in two distinct operation modes as it was necessary in the state of the art, e.g. a regular operation mode for RF signal measurement and a calibration mode for calibration solely, since the calibration can be done simultaneously with the RF signal measurement, namely in real-time and on-the-fly or rather during an ongoing measurement.

Instead of the (directional) coupler, the coupling device 26 may also relate to a multiplexer that is connected with the antenna 12 and the calibration signal generator 24 via two input ports such that the RF signal and the calibration signal are multiplexed in order to obtain a single multiplexed output signal that is forwarded to the receiver 16 via an output port of the multiplexer. Thus, the multiplexer may relate to a 2:1-multiplexer while having two input ports and one output port.

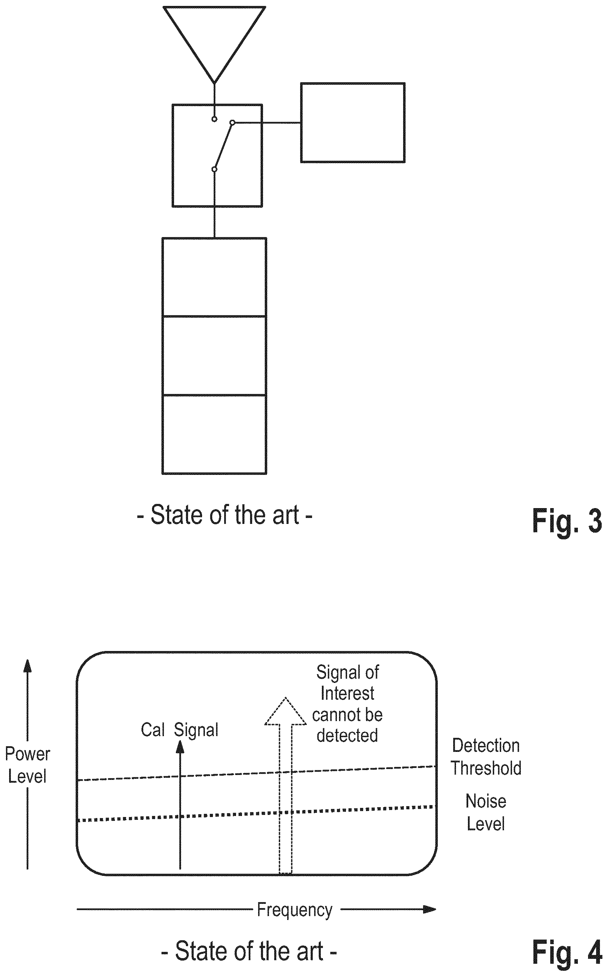

Irrespective thereof, the comparison of Figures 2 and 4 also illustrate that the calibration signal has a power level below the detection threshold of the receiver 16 such that the calibration signal is not processed by the receiver 16 as part of the RF spectrum. Actually, this would not happen in the state of the art, as no RF measurement takes place when the calibration signal is fed to the receiver 16 due to the switching operation.

However, it becomes obvious that the two distinct operation modes used in the state of the art may cause missing a signal of interest, namely a certain RF signal, as indicated by the dashed lines in Figure 4. In contrast thereto, the system 10 and the corresponding method according to the invention ensure that all signals of interest, e.g. all RF signals, are detected even though a calibration is done since the calibration is performed simultaneously with the RF signal measurement.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A system (10) for real-time calibration, wherein the system (10) comprises at least one antenna (12) configured to receive a radio frequency signal, a receiver (16), and an antenna path (14), wherein the antenna path (14) is connected to the at least one antenna (12) and the receiver (16), and wherein the system (10) comprises a calibration signal generator (24) configured to generate a calibration signal, **characterized in that** the system (10) comprises a coupling device (26) connected with the calibration signal generator (24) and the antenna path (14), wherein the coupling device (26) is configured to couple the calibration signal into the antenna path (14) such that the calibration signal and the radio frequency signal are forwarded simultaneously to the receiver (16) via the antenna path (14).

2. The system (10) according to claim 1, wherein the calibration signal generator (24) is configured to generate the calibration signal in a continuous manner.

3. The system (10) according to claim 1 or 2, wherein the calibration signal generator (24) is configured to generate the calibration signal with a predetermined power level.

4. The system (10) according to any one of the preceding claims, wherein a power level of the calibration signal is below a detection threshold of the receiver (16) and/or higher than a noise floor level.

5. The system (10) according to any one of the preceding claims, wherein the receiver (16) is configured to calibrate itself by processing the calibration signal during a regular operation.

6. The system (10) according to any one of the preceding claims, wherein the calibration signal generator (24) is configured to generate the calibration signal in a frequency range outside of a frequency band of detection of the receiver (16).

7. The system (10) according to any one of the preceding claims, wherein the coupling device (26) is a coupler, particularly a directional coupler, or a multiplexer such that the calibration signal and the radio frequency signal are multiplexed in order to obtain a single multiplexed output signal forwarded to the receiver (16).

8. A method of performing a real-time calibration, with the following steps:
- Receiving, by at least one antenna (12), a radio frequency signal,
- Forwarding the radio frequency signal to an antenna path (14),
- Generating, by a calibration signal generator (24), a calibration signal,
**characterized by** the steps of:
- Coupling, by a coupling device (26), the calibration signal into the antenna path (14), and
- Forwarding the radio frequency signal and the calibration signal simultaneously to a receiver (16) connected to the antenna path (14).

9. The method according to claim 8, wherein the calibration signal is generated continuously by the calibration signal generator (24).

10. The method according to claim 8 or 9, wherein the receiver (16) calibrates itself by processing the calibration signal during a regular operation in which a radio frequency measurement is performed.

11. The method according to any one of claims 8 to 10, wherein a power level of the calibration signal is higher than a noise floor level and/or below a detection threshold of the receiver (16).

12. The method according to any one of claims 8 to 11, wherein the calibration signal is generated in a frequency range outside of a frequency band of detection of the receiver (16).

13. The method according to any one of claims 8 to 12, wherein the calibration signal is a narrowband calibration signal or a broadband calibration signal.

14. The method according to any one of claims 8 to 13, wherein the calibration signal consists of at least one reference frequency.

15. The method according to claim 14, wherein the at least one reference frequency varies over time.
